(19) Europäisches Patentamt
European Patent Office
Office européen des brevets

(11) EP 3 022 273 B1

(12) **EUROPEAN PATENT SPECIFICATION**

(45) Date of publication and mention of the grant of the patent:
**11.04.2018 Bulletin 2018/15**

(21) Application number: **14827019.2**

(22) Date of filing: **17.07.2014**

(51) Int Cl.:
***C09K 19/52*** *(2006.01)* ***G02F 1/13*** *(2006.01)*
***C08J 5/18*** *(2006.01)* ***C09K 19/12*** *(2006.01)*
***C09K 19/42*** *(2006.01)* ***C09K 19/54*** *(2006.01)*
***C09K 19/60*** *(2006.01)* ***G02F 1/1334*** *(2006.01)*

(86) International application number:
**PCT/CN2014/082366**

(87) International publication number:
**WO 2015/007218 (22.01.2015 Gazette 2015/03)**

(54) **LIQUID CRYSTAL POLYMER COMPOSITION, METHOD FOR PREPARING SAME, AND LIQUID CRYSTAL ARTICLE COMPRISING SAME**

FLÜSSIGKRISTALLINE POLYMERZUSAMMENSETZUNG, VERFAHREN ZUR HERSTELLUNG DAVON UND FLÜSSIGKRISTALLARTIKEL DAMIT

COMPOSITION POLYMÈRE À CRISTAUX LIQUIDES, PROCÉDÉ POUR SA PRÉPARATION ET OBJET À CRISTAUX LIQUIDES LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.07.2013 CN 201310303920**

(43) Date of publication of application:
**25.05.2016 Bulletin 2016/21**

(73) Proprietor: **Saint-Gobain Glass France
Courbevoie (FR)**

(72) Inventors:
- **SHI, Songlin
Shanghai 200245 (CN)**
- **ZHANG, Xiaohuan
Shanghai 200245 (CN)**
- **ZHANG, Shuai
Shanghai 200245 (CN)**

(74) Representative: **Saint-Gobain Recherche
Département Propriété Industrielle
39 Quai Lucien Lefranc
93300 Aubervilliers (FR)**

(56) References cited:
**WO-A1-2004/076589**
**WO-A2-2011/068365**
**CN-A- 101 768 449**
**JP-A- 2006 504 991**
**US-A1- 2007 071 911**
**US-A1- 2007 131 903**
**US-A1- 2010 227 084**

- **PRAVEEN MALIK ET AL: "Guest-Host Polymer Dispersed Liquid Crystal Display Device: Role of Dichroic Dye", PROC. OF ASID'06, 8 October 2006 (2006-10-08), XP055339985, New Delhi**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### FIELD OF THE INVENTION

The invention pertains to the field of crystal liquid, and relates to a liquid crystal dispersed in a polymer, particularly to a liquid crystal polymer composition comprising anisotropic light absorbing particles, a method for preparing the same, and a liquid crystal article comprising the same.

### BACKGROUND

PDLC (polymer dispersed liquid crystal) was developed in 1980s. Since then, it has been expected to be used in a diversity of applications, because PDLC can realize transformation between diffusion state and clear state in electric field. A PDLC is for example disclosed in WO 2011/068365 A2. PDLC consists of small drops of liquid crystal dispersed in a solid polymer matrix. Fig. 1 shows the working principle of a traditional PDLC device. As shown by Fig. 1, the PDLC is a "Swiss cheese" polymer comprising small liquid crystal drops 12 which fill the pores. The small liquid crystal drops 12 are dispersed in the polymer matrix 11. The PDLC device also comprises an ITO (indium-tin oxide) conductor 13. When no voltage is applied, the PDLC device is opaque (i.e. in a shading state (off)), because all of the liquid crystal molecules in the small liquid crystal drops 12 are not oriented, such that light is scattered at the interface between the small liquid crystal drops 12 and the polymer matrix 11 (due to reflectivity mismatch) and the device exhibits an opaque state. When an appropriate voltage is applied, the device will exhibit a clear state (i.e. a transparent state (on)), because the liquid crystal molecules in the individual small liquid crystal drops 12 are aligned in the applied electric field.

Currently, the commercially available PDLC film or glass is opalescent in an opaque state, which fails to satisfy the great need of colored PDLCs in the market. Up to now, an overwhelming majority of the commercially available colored PDLCs are made by applying a colored PVB (polyvinyl butyral) film to one or both sides of the PDLC. Fig. 2 shows traditional colored PDLCs having colored PVB films. Fig. 2(a) shows a PDLC having colored PVB films on both sides. This colored PDLC has an outermost layer of glass 21 and an innermost layer of glass 21, a colored PVB film 22' on the outermost layer of glass 21 and a colored PVB film 22' on the innermost layer of glass 21, and a liquid crystal film 23 positioned between the two colored PVB films 22'. Fig. 2(b) shows a PDLC having a colored PVB film on one side. This colored PDLC has an outermost layer of glass 21 and an innermost layer of glass 21, a colored PVB film 22' on the outermost layer of glass 21 and a PVB film 22 on the innermost layer of glass 21, and a liquid crystal film 23 positioned between the colored PVB film 22' and the PVB film 22. Since color is incorporated into PVB, color changes when PDLC is clear. However, the commercially available PDLC film or glass at present still can not meet the need of consumers for high-contrast PDLC having a colored opaque state and a colorless or undertoned clear state.

Therefore, there exists an urgent need in the art for development of a high-contrast PDLC glass or film having a colored opaque state and a colorless or undertoned clear state.

### SUMMARY

The invention provides a novel liquid crystal polymer composition, a method for preparing the same, and a liquid crystal article comprising the same, such that the deficiencies and problems existing in the prior art are eliminated.

The inventors of the present application have found from research that an ideal high-contrast PDLC device having a colored opaque state and a colorless or undertoned clear state can be obtained by using a particular ratio of particular liquid crystals in a liquid crystal polymer composition and dispersing anisotropic light absorbing particles therein. The present invention has thus been accomplished on the basis of the foregoing findings.

In one aspect, the invention provides a liquid crystal polymer composition comprising, dispersed in the polymer, a liquid crystal and anisotropic light absorbing particles, wherein the liquid crystal comprises a mixture of 35-80 parts by weight of biphenyl nitriles liquid crystal, 5-30 parts by weight of phenyl benzoates liquid crystal, 5-30 parts by weight of fluoro biphenyls liquid crystal, and 1-20 parts by weight of benzene nitriles liquid crystal.

In one preferred embodiment, the polymer is prepared from a prepolymer, wherein the prepolymer comprises a photoinitiator, a monomer, a crosslinker and an oligomer having a molecular weight of 1000-5000 g/mol, wherein the monomer is selected from the group consisting of acrylates monomer and isocyanates monomer, the crosslinker is selected from the group consisting of acrylates crosslinker and isocyanates crosslinker, and the oligomer is selected from acrylates oligomer having a molecular weight of 1000-5000 g/mol.

In another preferred embodiment, the anisotropic light absorbing particles comprise a dichroic dye.

In another preferred embodiment, the biphenyl nitriles liquid crystal is selected from a liquid crystal having the following structure: 4-ethyl-4'-cyanobiphenyl, 4-butyl-4'-cyanobiphenyl, 4-pentyl-4'-cyanobiphenyl, 4-pentyloxy-4'-cyanobiphenyl, 4-(4-hexyloxyphenyl)benzonitrile, 3-fluoro-4-cyano-4"-propyl-1,1',4',1"-terphenyl, 4-cyano-4'-trans-pentylcyclohexanebiphenyl, 4-cyano-4'-pentylterphenyl, 4-heptanoylbiphenyl or 4-n-octanoylbiphenyl;

the phenyl benzoates liquid crystal is selected from a liquid crystal having the following structure: 4-cyanophenyl 4-ethylbenzoate, 3-fluoro-4-cyanophenyl 4-n-propylbenzoate or 4-butyl-benzoic acid 4-cyanophenylester;
the fluoro biphenyls liquid crystal is selected from a liquid crystal having the following structure: 4,4'-bis(trans-4-propylcyclohexyl)-2-fluorobiphenyl; and
the benzene nitriles liquid crystal is selected from a liquid crystal having the following structure: 1-cyano-4-(4-propylcyclohexyl)benzene.

In another preferred embodiment, the photoinitiator is selected from the group consisting of benzoin-ether photoinitiator, benzophenone-type photoinitiator and thioxanthone-type photoinitiator; and
the acrylate is selected from $C_{1-20}$ alkyl acrylate.

In another preferred embodiment, the photoinitiator is selected from the group consisting of 2,2-dimethoxy-1,2-diphenylethanone, benzil, 2-chlorothioxanthone and 2-isopropylthioxanthone;
the acrylates monomer is selected from the group consisting of methyl acrylates monomer, n-propyl acrylates monomer, n-butyl acrylates monomer, n-octyl acrylates monomer, hydroxyl ethyl acrylates monomer and 2-ethyl hexyl acrylates monomer;
the acrylates crosslinker is selected from the group consisting of methyl acrylates crosslinker, n-propyl acrylates crosslinker, n-butyl acrylates crosslinker, n-octyl acrylates crosslinker, hexanediol diacrylates crosslinker, tri(propylene glycol) diacrylates crosslinker and trimethylolpropane triacrylates crosslinker; and
the isocyanates crosslinker is selected from the group consisting of isophorone diisocyanates crosslinker.

In another preferred embodiment, the dichroic dye comprises red dichroic dye, yellow dichroic dye and blue dichroic dye, and the red dichroic dye, yellow dichroic dye and blue dichroic dye are selected from anthraquinone-type dichroic dye.

In another preferred embodiment, the red dichroic dye is selected from a dye having the following structure:

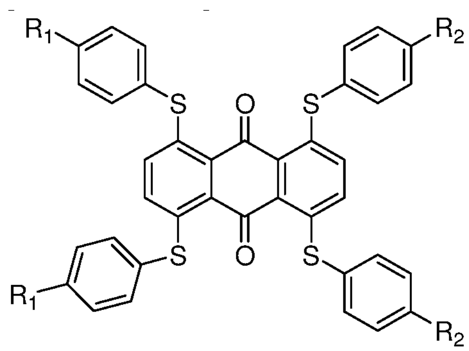

wherein $R_1$ and $R_2$ are H, methyl, ethyl or tert-butyl; the yellow dichroic dye is selected from a dye having the following structure:

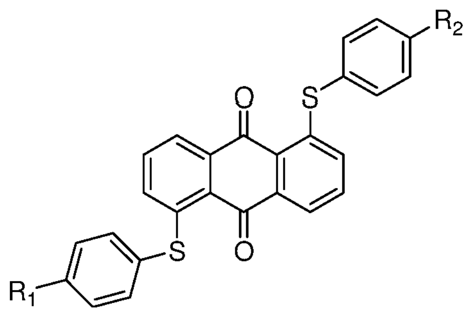

wherein $R_1$ and $R_2$ are H, tert-butyl, F or $CF_3$; and the blue dichroic dye is selected from a dye having the following structure:

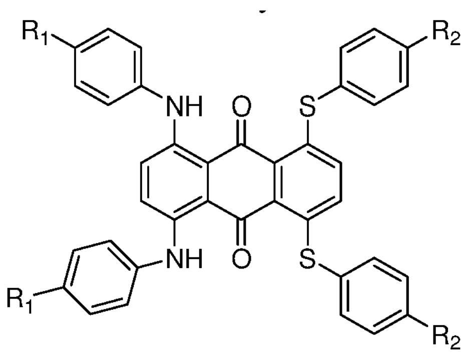

wherein $R_4$ and $R_2$ are H, methyl, ethyl or tert-butyl. Such dyes have been described in US 2010/0227084 A1. In another preferred embodiment, the composition further comprises a viscosity conditioner and/or a stabilizer added to the liquid crystal, wherein the viscosity conditioner is selected from the group consisting of isocyanates viscosity conditioner and acrylates viscosity conditioner, and the stabilizer is selected from benzotriazoles UV light absorption stabilizer.

In another preferred embodiment, the viscosity conditioner is selected from the group consisting of isophorone diisocyanate, glycide acrylate, toluene diisocyanate, and diphenylmethane diisocyanate; and the stabilizer is selected from benzotriazolyl methyl phenol.

In another aspect, the invention provides a method for preparing a liquid crystal polymer composition, including the following steps:

premixing a liquid crystal with anisotropic light absorbing particles to obtain a premixture; and

mixing the obtained premixture with a prepolymer to obtain the composition, laminating and UV curing the resultant composition, wherein the intensity for UV curing is 10-500mw/cm, and wherein the liquid crystal comprises a mixture of 35-80 parts by weight of biphenyl nitriles liquid crystal, 5-30 parts by weight of phenyl benzoates liquid crystal, 5-30 parts by weight of fluoro biphenyls liquid crystal, and 1-20 parts by weight of benzene nitriles liquid crystal, and wherein the prepolymer comprises a photoinitiator, a monomer, a crosslinker and an oligomer having a molecular weight of 1000-5000 g/mol, wherein the monomer is selected from the group consisting of acrylates monomer and isocyanates monomer, the crosslinker is selected from the group consisting of acrylates crosslinker and isocyanates crosslinker, and the oligomer is selected from acrylates oligomer having a molecular weight of 1000-5000 g/mol; and the anisotropic light absorbing particles comprise a dichroic dye.

In another preferred embodiment, the premixing includes adding anisotropic light absorbing particles of different colors to the liquid crystal respectively and mixing them together.

In another preferred embodiment, the dichroic dye comprises red dichroic dye, yellow dichroic dye and blue dichroic dye, and the red dichroic dye, yellow dichroic dye and blue dichroic dye are selected from anthraquinone-type dichroic dye; the ratio of the red dichroic dye, yellow dichroic dye and blue dichroic dye is regulated according to the target color, and the content of the dichroic dye based on the weight of the liquid crystal polymer composition is less than 10%.

In still another aspect, the invention provides a liquid crystal article comprising: a first substrate, a second substrate, and a layer of the above liquid crystal polymer composition between the first substrate and the second substrate, wherein when no voltage is applied to the liquid crystal article, the liquid crystal article is opaque; while when voltage is applied to the liquid crystal article, the liquid crystal article is becoming clear, and the extent of transparency varies according to the applied voltage.

Beneficial effects of the invention are as follows:

Compared with the PDLC devices commercially available at present, the PDLC device of the invention has a colored opaque state and a colorless or undertoned clear state, and has high contrast, well suited for energy saving applications in connection with vehicles and buildings.

BRIEF DESCRIPTION OF THE DRAWINGS

Fig. 1 shows the working principle of a traditional PDLC device.
Fig. 2 shows traditional colored PDLCs having colored PVB films.
Fig. 3 shows the working principle of a dichroic dye.
Fig. 4 shows the influence of the concentration of a dichroic dye on the performance of the resultant device.

Fig. 5 shows comparison between the black PDLC device at a concentration of 2wt% obtained according to Example 1 in the present application and a traditional PDLC device.

## DETAILED DESCRIPTION

### Liquid crystal polymer composition

In one aspect, there is provided a liquid crystal polymer composition comprising a liquid crystal and anisotropic light absorbing particles which are dispersed in the polymer.

### Liquid crystal

In the liquid crystal polymer composition of the invention, the liquid crystal comprises a mixture of 35-80 parts by weight of biphenyl nitriles liquid crystal, 5-30 parts by weight of phenyl benzoates liquid crystal, 5-30 parts by weight of fluoro biphenyls liquid crystal, and 1-20 parts by weight of benzene nitriles liquid crystal.

The specific examples of the biphenyl nitriles liquid crystal include but are not limited to those listed in the following table:

| Structure | Common Name | CAS Number | Designation |
|---|---|---|---|
| 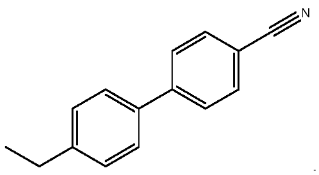 | 2CB | 58743-75-2 | 4-ethyl-4'-cyanobiphenyl |
| 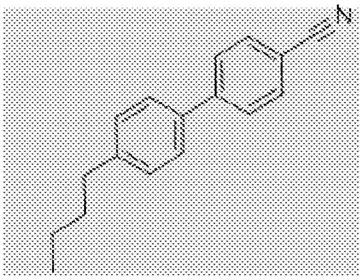 | 4CB | 52709-83-8 | 4-butyl-4'-cyanobiphenyl |
| 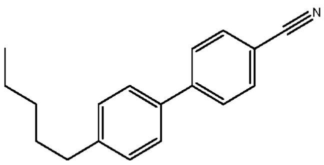 | 5CB | 40817-08-1 | 4-pentyl-4'-cyanobiphenyl |
| 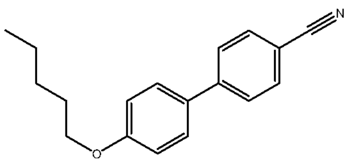 | 50CB | 52364-71-3 | 4-pentyloxy-4'-cyanobiphenyl |
| 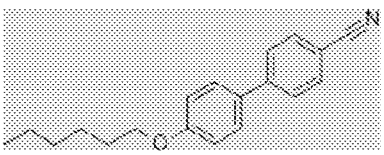 | 6OCB | 41424-11-7 | 4-(4-hexyloxyphenyl)benzonitrile |

(continued)

| Structure | Common Name | CAS Number | Designation |
|---|---|---|---|
| 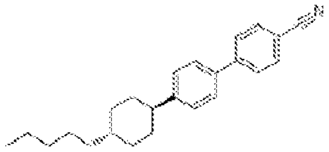 | 5CCB | 68065-81-6 | 4-cyano-4'-trans-pentylcyclohexanebiphenyl |
| 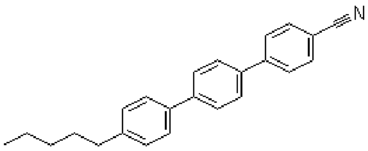 | 5CT | 54211-46-0 | 4-cyano-4'-pentylterphenyl |
| 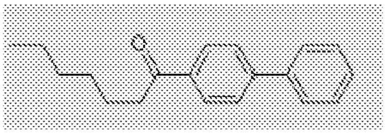 | | 59662-27-0 | 4-heptanoylbiphenyl |
| 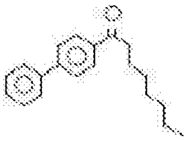 | | 47162-00-5 | 4-n-octanoylbiphenyl |

The specific examples of the phenyl benzoates liquid crystal include but are not limited to those listed in the following table:

| Structure | Common Name | CAS Number | Designation |
|---|---|---|---|
| 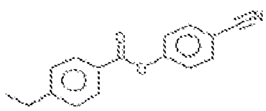 | | 56131-48-7 | 4-cyanophenyl 4-ethylbenzoate |
| 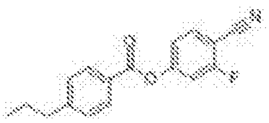 | | 86776-51-4 | 3-fluoro-4-cyanophenyl 4-n-propylbenzoate |
| 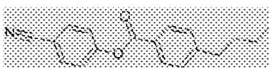 | | 38690-77-6 | 4-butyl-benzoic acid 4-cyanophenylester |

The specific examples of the fluoro biphenyls liquid crystal include but are not limited to those listed in the following table:

| Structure | Common Name | CAS Number | Designation |
|---|---|---|---|
| 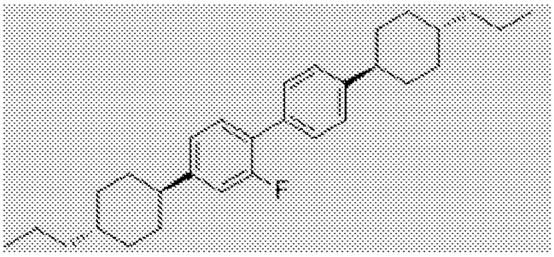 | | 102714-93-2 | 4,4'-bis(trans-4-propylcyclohexyl)-2-fluorobiphenyl |
| 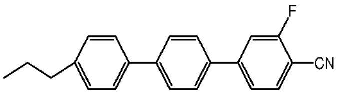 | 3CTF | 127655-35-0 | 3-fluoro-4-cyano-4"-propyl-1,1',4',1"-terphenyl |

The specific examples of the benzene nitriles liquid crystal include but are not limited to those listed in the following table:

| Structure | Common Name | CAS Number | Designation |
|---|---|---|---|
| 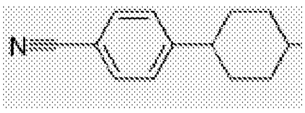 | | 62788-03-8 | 1-cyano-4-(4-propylcyclohexyl)benzene |

In the invention, the liquid crystal meets the following physical parameters:

- optical anisotropy: $\Delta n>0.2$

$$n_e = 1.6\text{-}1.8;$$

$$n_o = 1.4\text{-}1.6;$$

- clear point >50°C.

Anisotropic liquid absorbing particles

In the invention, the anisotropic light absorbing particles comprise a dichroic dye.

The dichroic dye has an anisotropic geometric structure. Fig. 3 shows the working principle of a dichroic dye. As shown by Fig. 3a), when the vibration of the light is parallel to the long axis of the dye molecule, the dichroic dye has strong absorption and exhibits enhanced color; when the vibration of the light is parallel to the short axis of the dye molecule, the dichroic dye has weak absorption and results in diluted color, wherein a transition moment 31 is also shown. After UV polymerization of the prepolymer, the dye and the liquid crystal tend to move close to each other. As shown by Fig. 3b), the dichroic dye molecule 33 has a propensity to arrangement in the following way: its long molecular axis is aligned along the liquid crystal guiding device (the axis 32 of the small liquid crystal drop), leading to change of the color strength, which is realized by control over the direction of the liquid crystal molecule 34 in the small liquid crystal drop. Hence, the absorption of the dye can be adjusted by the orientation function of a liquid crystal nematic guiding device having an outer field.

In the invention, the dichroic dye comprises red dichroic dye R, yellow dichroic dye Y and blue dichroic dye B, and the red dichroic dye, yellow dichroic dye and blue dichroic dye are selected from anthraquinone-type dichroic dye.

In the invention, the red dichroic dye includes but is not limited to those having the following structure:

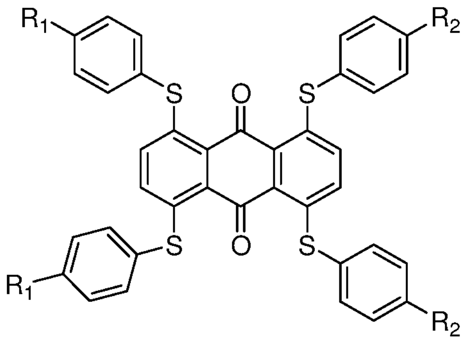

wherein $R_1$ and $R_2$ are H, methyl, ethyl or tert-butyl;
the yellow dichroic dye includes but is not limited to those having the following structure:

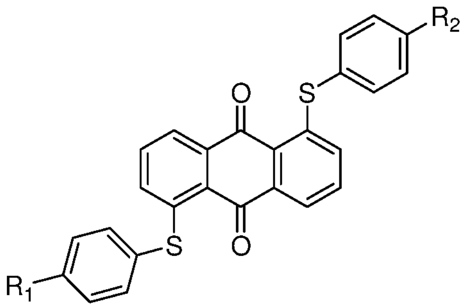

wherein $R_1$ and $R_2$ are H, tert-butyl, F or $CF_3$;
the blue dichroic dye includes but is not limited to those having the following structure:

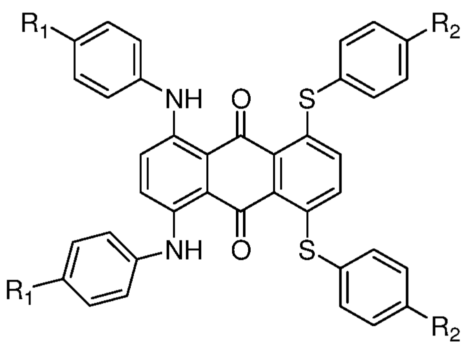

wherein $R_1$ and $R_2$ are H, methyl, ethyl or tert-butyl.

Polymer

In the invention, the polymer is prepared from a prepolymer, wherein the prepolymer comprises a photoinitiator, a monomer, a crosslinker and an oligomer having a molecular weight of 1000-5000 g/mol, wherein the monomer includes but not limited to acrylates monomer and isocyanates monomer, the crosslinker includes but not limited to acrylates crosslinker and isocyanates crosslinker, and the oligomer includes but not limited to acrylates oligomer having a molecular weight of 1000-5000 g/mol.
In the invention, the photoinitiator includes but not limited to benzoin-ether photoinitiator, benzophenone-type photoinitiator and thioxanthone-type photoinitiator.
In the invention, the specific examples of the photoinitiator include but are not limited to those listed in the following table:

| Structure | CAS Number | Designation | Note |
|---|---|---|---|
| 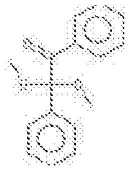 | 24650-42-8 | 2,2-dimethoxy-1,2-diphenylethanone | photoinitiator or UV curing agent |
| 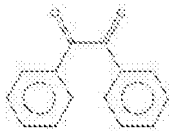 | 134-81-6 | benzil | photoinitiator or UV curing agent |
| 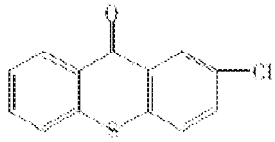 | 86-39-5 | 2-chlorothioxanthone | photoinitiator or UV curing agent |
| 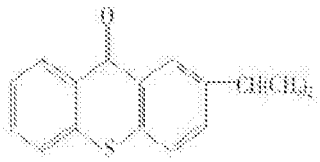 | 5495-84-1 | 2-isopropylthioxanthone | photoinitiator or UV curing agent |

In the invention, the acrylate includes but not limited to $C_{1-20}$ alkyl acrylate.

In the invention, the acrylates monomer includes but not limited to methyl acrylates monomer, n-propyl acrylates monomer, n-butyl acrylates monomer, n-octyl acrylates monomer, hydroxyl ethyl acrylates monomer and 2-ethyl hexyl acrylates monomer.

In the invention, the acrylates crosslinker includes but not limited to methyl acrylates crosslinker, n-propyl acrylates crosslinker, n-butyl acrylates crosslinker, n-octyl acrylates crosslinker, hexanediol diacrylates crosslinker, tri(propylene glycol) diacrylates crosslinker and trimethylolpropane triacrylates crosslinker.

In the invention, the isocyanates crosslinker includes but not limited to isophorone diisocyanates crosslinker.

In the invention, the prepolymer meets the following conditions:

- optical requirement: refractive index n = refractive index of the liquid crystal $n_o$
- chemical requirement: miscible with the liquid crystal
- after the prepolymer is polymerized by UV curing, the liquid crystal is weakly miscible with the polymer, which facilitates phase separation.

<u>Additives</u>

In the invention, the composition further comprises additives added into the liquid crystal, including but not limited to a viscosity conditioner and/or a stabilizer, wherein the viscosity conditioner includes but is not limited to isocyanates viscosity conditioner and acrylates viscosity conditioner, and the stabilizer includes but is not limited to benzotriazoles UV light absorption stabilizer.

In the invention, the viscosity conditioner includes but is not limited to isophorone diisocyanate, glycide acrylate, toluene diisocyanate, and diphenylmethane diisocyanate; and the stabilizer includes but is not limited to benzotriazolyl methyl phenol.

<u>Method for preparing the liquid crystal polymer composition</u>

In a second aspect of the invention, there is provided a method for preparing a liquid crystal polymer composition, including the following steps:

premixing a liquid crystal with anisotropic light absorbing particles to obtain a premixture; and
mixing the obtained premixture with a prepolymer to obtain the composition.

In the invention, the method further comprises: laminating and UV curing the obtained composition, wherein the parameters for the UV curing depend on: (i) the concentration of the dye (the UV intensity for a concentration of 2% and higher is higher than that for a concentration of 0.4% or 1%); (ii) the R/Y/B ratio (the UV absorption is different for R, Y and B); and (iii) the formulation of the prepolymer.
In the invention, the intensity for the UV curing is 10-500mw/cm$^2$.
In the invention, the premixing includes adding anisotropic light absorbing particles of different colors to the liquid crystal respectively and mixing them together.

Liquid crystal article

In a third aspect of the invention, there is provided a liquid crystal article comprising: a first substrate, a second substrate, and a layer of the above liquid crystal polymer composition between the first substrate and the second substrate, wherein when no voltage is applied to the liquid crystal article, the liquid crystal article is opaque; while when voltage is applied to the liquid crystal article, the liquid crystal article is becoming clear, and the extent of transparency varies according to the applied voltage.

Examples

The invention will be further illustrated with reference to the following specific examples. The following examples are intended to explain and demonstrate the invention only, without limitation to the scope of the invention.

Example 1: preparation of a colored PDLC device

The preparation process included the following steps:
A liquid crystal having the following composition:

| Designation | Weight percentage (%) |
|---|---|
| 4-ethyl-4'-cyanobiphenyl | 4 |
| 4-butyl-4'-cyanobiphenyl | 7 |
| 4-pentyl-4'-cyanobiphenyl | 8 |
| 4-pentyloxy-4'-cyanobiphenyl | 10 |
| 4-(4-hexyloxyphenyl)benzonitrile | 4 |
| 4-cyano-4'-trans-pentylcyclohexanebiphenyl | 5 |
| 4-cyano-4'-pentylterphenyl | 2 |
| 4-heptanoylbiphenyl | 2 |
| 4-n-octanoylbiphenyl | 3 |
| 4-cyanophenyl 4-ethylbenzoate | 10 |
| 3-fluoro-4-cyanophenyl 4-n-propylbenzoate | 5 |
| 4-butyl-benzoic acid 4-cyanophenylester | 5 |
| 4,4'-bis(trans-4-propylcyclohexyl)-2-fluorobiphenyl | 10 |
| 3-fluoro-4-cyano-4"-propyl-1,1',4',1"-terphenyl | 10 |
| 1-cyano-4-(4-propylcyclohexyl)benzene | 15 |

was premixed with a red dichroic dye R - 1,4-bis(4-tert-butylphenylthio)-5,8-diphenylthioanthraquinone, a yellow dichroic dye Y - 1,5-diphenylthioanthraquinone, and a blue dichroic dye B - 1,4-bis(4-tert-butylphenylamino)-5,8-diphenylthioanthraquinone respectively, all at a concentration of 1%.
The RYB liquid crystal-dye premixtures obtained above were mixed at a ratio of R/Y/B=1.5/2/1, and stirred to obtain a homogeneous mixed liquid in a color of gray black.
A prepolymer (oligomer: polymethyl methacrylate having a molecular weight of 3800 g/mol; hydroxyl ethyl acrylate; 2-ethyl hexyl acrylate; crosslinker: isophorone diisocyanate; hexanediol diacrylate; tri(propylene glycol) diacrylate, at a compositional ratio of 10%, 10%, 50%, 15%, 10%, 5%) was further mixed with the above mixture of liquid crystal and dye at a mixing ratio of 50%/50%.

After mixed homogeneously, a photoinitiator 2,2-dimethoxy-1,2-diphenylethanone was added finally in an amount of 2% of the prepolymer.

The final mixture obtained was laminated and UV cured to obtain a PDLC device, wherein the parameters for the UV curing were as follows: the illumination intensity was 50mw/cm$^2$, and the illumination time was 60 seconds.

Example 2: preparation of a colored PDLC device

The composition of the prepolymer, the photoinitiator and its proportion added, and the composition of the dyes were the same as those in Example 1. The R/Y/B ratio was 1.5/2/1, the amount of the dyes added was 1% of the liquid crystal, and the liquid crystal was premixed with the dyes, the same as those in Example 1 except for the composition of the liquid crystal which was shown in the following table:

| Designation | Weight percentage (%) |
|---|---|
| 4-ethyl-4'-cyanobiphenyl | 4 |
| 4-butyl-4'-cyanobiphenyl | 4 |
| 4-pentyl-4'-cyanobiphenyl | 16 |
| 4-pentyloxy-4'-cyanobiphenyl | 20 |
| 4-(4-hexyloxyphenyl)benzonitrile | 11 |
| 4-cyano-4'-trans-pentylcyclohexanebiphenyl | 3 |
| 4-cyano-4'-pentylterphenyl | 2 |
| 4-heptanoylbiphenyl | 0 |
| 4-n-octanoylbiphenyl | 0 |
| 4-cyanophenyl 4-ethylbenzoate | 6 |
| 3-fluoro-4-cyanophenyl 4-n-propylbenzoate | 2 |
| 4-butyl-benzoic acid 4-cyanophenylester | 1 |
| 4,4'-bis(trans-4-propylcyclohexyl)-2-fluorobiphenyl | 17 |
| 3-fluoro-4-cyano-4"-propyl-1,1',4',1"-terphenyl | 12 |
| 1-cyano-4-(4-propylcyclohexyl)benzene | 2 |

The final mixture obtained was laminated and UV cured to obtain a PDLC device, wherein the parameters for the UV curing were as follows: the illumination intensity was 50mw/cm$^2$, and the illumination time was 60 seconds.

Example 3: preparation of a colored PDLC device

The composition of the prepolymer, the photoinitiator and its proportion added, and the composition of the dyes were the same as those in Example 1. The R/Y/B ratio was 1.5/2/1, the amount of the dyes added was 1% of the liquid crystal, and the liquid crystal was premixed with the dyes, the same as those in Example 1 except for the composition of the liquid crystal which was shown in the following table:

| Designation | Weight percentage (%) |
|---|---|
| 4-ethyl-4'-cyanobiphenyl | 2 |
| 4-butyl-4'-cyanobiphenyl | 10 |
| 4-pentyl-4'-cyanobiphenyl | 30 |
| 4-pentyloxy-4'-cyanobiphenyl | 20 |
| 4-(4-hexyloxyphenyl)benzonitrile | 12 |

(continued)

| Designation | Weight percentage (%) |
|---|---|
| 4-cyano-4'-trans-pentylcyclohexanebiphenyl | 3 |
| 4-cyano-4'-pentylterphenyl | 2 |
| 4-heptanoylbiphenyl | 0 |
| 4-n-octanoylbiphenyl | 0 |
| 4-cyanophenyl 4-ethylbenzoate | 5 |
| 3-fluoro-4-cyanophenyl 4-n-propylbenzoate | 3 |
| 4-butyl-benzoic acid 4-cyanophenylester | 3 |
| 4,4'-bis(trans-4-propylcyclohexyl)-2-fluorobiphenyl | 7 |
| 3-fluoro-4-cyano-4"-propyl-1,1',4',1"-terphenyl | 1 |
| 1-cyano-4-(4-propylcyclohexyl)benzene | 2 |

The final mixture obtained was laminated and UV cured to obtain a PDLC device, wherein the parameters for the UV curing were as follows: the illumination intensity was 50mw/cm$^2$, and the illumination time was 60 seconds.

Example 4: preparation of a colored PDLC device

The composition of the liquid crystal, the composition of the prepolymer, the photoinitiator and its proportion added, and the composition of the dyes were the same as those in Example 1. The R/Y/B ratio was 1.5/2/1, the amount of the dyes added was 2% of the liquid crystal, and the liquid crystal was premixed with the dyes, the same as those in Example 1. The final mixture obtained was laminated and UV cured to obtain a PDLC device, wherein the parameters for the UV curing were as follows: the illumination intensity was 50mw/cm$^2$, and the illumination time was 60 seconds.

Example 5: preparation of a colored PDLC device

The composition of the liquid crystal, the composition of the prepolymer, the photoinitiator and its proportion added, and the composition of the dyes were the same as those in Example 1. The R/Y/B ratio was 1.5/2/1, the amount of the dyes added was 2% of the liquid crystal, and the liquid crystal was premixed with the dyes, the same as those in Example 1. The final mixture obtained was laminated and UV cured to obtain a PDLC device, wherein the parameters for the UV curing were as follows: the illumination intensity was 80mw/cm$^2$, and the illumination time was 60 seconds.

Example 6: preparation of a colored PDLC device

The composition of the liquid crystal, the composition of the prepolymer, the photoinitiator and its proportion added, and the composition of the dyes were the same as those in Example 1. The R/Y/B ratio was 1.5/2/1, the amount of the dyes added was 2wt% of the liquid crystal, and the liquid crystal was premixed with the dyes, the same as those in Example 1. The final mixture obtained was laminated and UV cured to obtain a PDLC device, wherein the parameters for the UV curing were as follows: the illumination intensity was 100mw/cm$^2$, and the illumination time was 60 seconds.

Example 7: preparation of a colored PDLC device

The composition of the liquid crystal, the composition of the prepolymer, the photoinitiator and its proportion added, and the composition of the dyes were the same as those in Example 1. The amount of the dyes added was 2wt% of the liquid crystal, and the liquid crystal was premixed with the dyes, the same as those in Example 1. The R/Y/B ratio was 1/1/0, and the color obtained was dark orange. The final mixture obtained was laminated and UV cured to obtain a PDLC device, wherein the parameters for the UV curing were as follows: the illumination intensity was 100mw/cm$^2$, and the illumination time was 60 seconds.

Example 8: preparation of a colored PDLC device

The composition of the liquid crystal, the composition of the prepolymer, the photoinitiator and its proportion

added, and the composition of the dyes were the same as those in Example 1. The amount of the dyes added was 2wt% of the liquid crystal, and the liquid crystal was premixed with the dyes, the same as those in Example 1. The R/Y/B ratio was 2/1/0, and the color obtained was purple. The final mixture obtained was laminated and UV cured to obtain a PDLC device, wherein the parameters for the UV curing were as follows: the illumination intensity was 100mw/$cm^2$, and the illumination time was 60 seconds.

Example 9: preparation of a colored PDLC device

The composition of the liquid crystal, the composition of the prepolymer, the photoinitiator and its proportion added, and the composition of the dyes were the same as those in Example 1. The amount of the dyes added was 2wt% of the liquid crystal, and the liquid crystal was premixed with the dyes, the same as in Example 1. The R/Y/B ratio was 3/4/1, and the color obtained was brown. The final mixture obtained was laminated and UV cured to obtain a PDLC device, wherein the parameters for the UV curing were as follows: the illumination intensity was 100mw/$cm^2$, and the illumination time was 60 seconds.

Example 10: preparation of a colored PDLC device

The composition of the liquid crystal, the composition of the prepolymer, the photoinitiator and its proportion added, and the composition of the dyes were the same as those in Example 1. The difference was that the dyes were added in an amount of 2% of the weight of the liquid crystal after the liquid crystal was mixed homogeneously with the prepolymer beforehand, wherein the R/Y/B ratio was 1.5/2/1. After mixed homogeneously, the photoinitiator was added. The final mixture obtained was laminated and UV cured to obtain a PDLC device, wherein the parameters for the UV curing were as follows: the illumination intensity was 100mw/$cm^2$, and the illumination time was 60 seconds.

Comparative Example 1

The composition of the liquid crystal, the composition of the prepolymer, the photoinitiator and its proportion added were the same as those in Example 1. Dyes were selected from oil soluble dyes. The difference was that a 2wt% oil soluble color dye such as red, blue or green dye, etc, was added to the liquid crystal, and mixed homogeneously under agitation. Then, the prepolymer and the photoinitiator were added, and mixed homogeneously. The mixture obtained was interposed between two pieces of ITO glass, and exposed at 100mw/$cm^2$ for 120 seconds. When no voltage was applied, the device looked sanded and was red, green or blue. When a voltage of 50 V was applied, the device looked clear, but with heavy color residue.

Property tests

Color and its depth may be adjusted according to different dye concentrations and R/Y/B ratios. The ratio of R/Y/B liquid crystal-dye mixtures may be adjusted to obtain different target colors. For example, R/Y/B=1/1/1 affords dark blue; R/Y/B=0/1/1 affords green; R/Y/B=1/4/1 affords dark green; R/Y/B=2/1/1 affords blue purple; R/Y/B=3/4/1 affords brown; and R/Y/B=1.5/2/1 affords gray black. Fig. 4 shows the influence of the concentration of a dichroic dye on the performance of the resultant device. As shown by Fig. 4, the colors obtained by the colored PDLC devices prepared in Examples 1-10 are 1% darkness and 2.0% low darkness. In contrast, when the dye concentrations are 0%, 3.0%, 4.0% and 5.0%, the colors obtained are high light, low darkness, black and black. According to the prior art technical solution based on colored PVB films, the colors achieved by a PDLC plant are limited by PVB products, and thus there is no freedom of color selection. When the present invention is employed, a PDLC plant can obtain almost any color by changing formulations.

The colored PDLC devices prepared in Examples 1-10 and the traditional PDLC device are compared. Specifically, the optical properties measured by visible light transmittance testing, haze testing and hiding ability testing are compared, and the results are shown in Table 1 below.

Table 1

| Dye Concentration | OFF | | ON | | Hiding Ability (%) |
|---|---|---|---|---|---|
| | Visible Light Transmittance (%) | Haze (%) | Visible Light Transmittance (%) | Haze (%) | |
| 0.0% | 65.0 | 100.0 | 88.2 | 10.7 | 7.0 |
| 0.4% | 49.6 | 100.0 | 83.6 | 8.4 | 6.1 |

(continued)

| Dye Concentration | OFF | | ON | | Hiding Ability (%) |
|---|---|---|---|---|---|
| | Visible Light Transmittance (%) | Haze (%) | Visible Light Transmittance (%) | Haze (%) | |
| 1.0% | 42.1 | 100.0 | 79.9 | 9.0 | 9.6 |
| 2.0% | 31.8 | 100.0 | 75.1 | 7.7 | 11.3 |
| 3.0% | 25.3 | 100.0 | 69.0 | 8.3 | 8.3 |
| 4.0% | 23.8 | 100.0 | 63.7 | 8.0 | 10.3 |
| 5.0% | 20.6 | 100.0 | 61.9 | 8.4 | 8.8 |

As indicated by Table 1,

- increase of dye concentration may darken a color in haze (darker than that at a concentration of 4%);
- the colored PDLC devices prepared in Examples 1-10 exhibit superior color homogeneity.

Fig. 5 shows a comparison between the PDLC device obtained in Example 6 at a concentration of 2% and the traditional PDLC device. As shown by Fig. 5, the traditional PDLC device (using a colored PVB film or ink type dyes) exhibits heavy color residue in a clear state. In contrast, the PDLC device obtained in Example 6 at a concentration of 2% shows a darker color in haze and less color residue in a clear state. Meanwhile, it has a wider space for adjusting the visible light transmittance, such that users can make adjustment in accordance with the intensity of the light outside and their own necessity. The following Table 2 below compares the optical properties of the PDLC device obtained in Example 6 at a concentration of 2% and the traditional PDLC device.

Table 2

| Sample Identity | Shading | | | Clear (50v) | |
|---|---|---|---|---|---|
| | Hiding Ability (%) | Haze (%) | Visible Light Transmittance (%) | Haze (%) | Visible Light Transmittance (%) |
| 2.0% -100mw-60S-1.5/2/1 | 11.3 | 100 | 31.8 | 7.7 | 75.1 |
| Traditional PDLC device without use of dyes, 50mw-60S | 7.0 | 100 | 65.0 | 10.7 | 88.2 |

As indicated by Table 2, in comparison to the traditional PDLC device, the PDLC device obtained in Example 6 at a concentration of 2% has:

- a lower hiding ability (about 11%); and
- a lower haze in a clear state (about 8%).

## Claims

1. A liquid crystal polymer composition comprising, dispersed in the polymer, a liquid crystal and anisotropic light absorbing particles, wherein the liquid crystal comprises a mixture of 35-80 parts by weight of biphenyl nitriles liquid crystal, 5-30 parts by weight of phenyl benzoates liquid crystal, 5-30 parts by weight of fluoro biphenyls liquid crystal, and 1-20 parts by weight of benzene nitriles liquid crystal.

2. The composition according to claim 1, wherein the anisotropic light absorbing particles comprise a dichroic dye.

3. The composition according to any one of claims 1-2, wherein the biphenyl nitriles liquid crystal is selected from a liquid crystal having the following structure: 4-ethyl-4'-cyanobiphenyl, 4-butyl-4'-cyanobiphenyl, 4-pentyl-4'-cyanobiphenyl, 4-pentyloxy-4'-cyanobiphenyl, 4-(4-hexyloxyphenyl)benzonitrile, 3-fluoro-4-cyano-4"-propyl-1,1',4',1"-terphenyl, 4-cyano-4'-trans-pentylcyclohexanebiphenyl, 4-cyano-4'-pentylterphenyl, 4-heptanoylbiphenyl or 4-n-octanoylbiphenyl.

**4.** The composition according to any one of claims 1-3, wherein the phenyl benzoates liquid crystal is selected from a liquid crystal having the following structure: 4-cyanophenyl 4-ethylbenzoate, 3-fluoro-4-cyanophenyl 4-n-propylbenzoate or 4-butyl-benzoic acid 4-cyanophenylester.

**5.** The composition according to any one of claims 1-4, wherein the fluoro biphenyls liquid crystal is selected from a liquid crystal having the following structure: 4,4'-bis(trans-4-propylcyclohexyl)-2-fluorobiphenyl.

**6.** The composition according to any one of claims 1-5, wherein the benzene nitriles liquid crystal is selected from a liquid crystal having the following structure: 1-cyano-4-(4-propylcyclohexyl)benzene.

**7.** The composition according to claim 2, wherein the dichroic dye comprises red dichroic dye, yellow dichroic dye and blue dichroic dye, and the red dichroic dye, yellow dichroic dye and blue dichroic dye are selected from anthraquinone-type dichroic dye.

**8.** The composition according to claim 7, wherein the red dichroic dye is selected from a dye having the following structure:

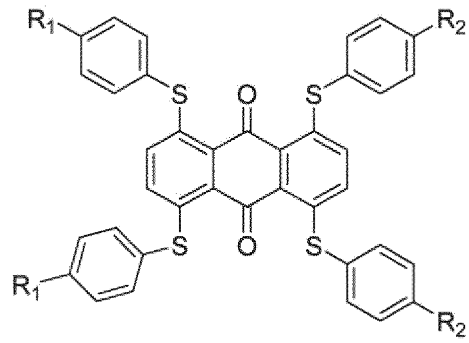

wherein $R_1$ and $R_2$ are H, methyl, ethyl or tert-butyl.

**9.** The composition according to claim 7, wherein the yellow dichroic dye is selected from a dye having the following structure:

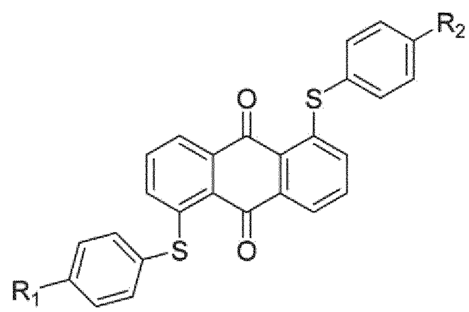

wherein $R_1$ and $R_2$ are H, tert-butyl, F or $CF_3$.

**10.** The composition according to claim 7, wherein the blue dichroic dye is selected from a dye having the following structure:

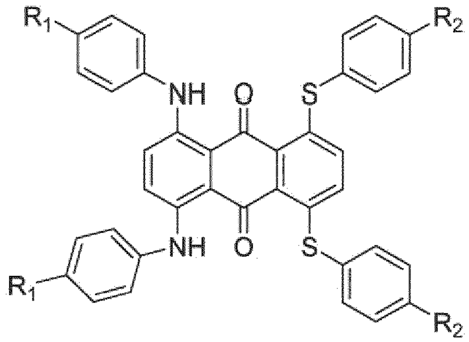

wherein $R_1$ and $R_2$ are H, methyl, ethyl or tert-butyl.

**11.** The composition according to any one of claims 1-10, further comprising a viscosity conditioner and/or a stabilizer added to the liquid crystal, wherein the viscosity conditioner is selected from the group consisting of isocyanates viscosity conditioner and acrylates viscosity conditioner, and the stabilizer is selected from benzotriazoles UV light absorption stabilizer.

**12.** The composition according to claim 11, wherein the viscosity conditioner is selected from the group consisting of isophorone diisocyanate, glycide acrylate, toluene diisocyanate, and diphenylmethane diisocyanate; and the stabilizer is selected from benzotriazolyl methyl phenol.

**13.** A method for preparing a liquid crystal polymer composition, including the following steps:

premixing a liquid crystal with anisotropic light absorbing particles to obtain a premixture; and
mixing the obtained premixture with a prepolymer to obtain a composition,
laminating and UV curing the resultant composition, wherein the intensity for UV curing is 10-500mw/$cm^2$, and wherein the liquid crystal comprises a mixture of 35-80 parts by weight of biphenyl nitriles liquid crystal, 5-30 parts by weight of phenyl benzoates liquid crystal, 5-30 parts by weight of fluoro biphenyls liquid crystal, and 1-20 parts by weight of benzene nitriles liquid crystal, and
wherein the prepolymer comprises a photoinitiator, a monomer, a crosslinker and an oligomer having a molecular weight of 1000-5000 g/mol, wherein the monomer is selected from the group consisting of acrylates monomer and isocyanates monomer, the crosslinker is selected from the group consisting of acrylates crosslinker and isocyanates crosslinker, and the oligomer is selected from acrylates oligomer having a molecular weight of 1000-5000 g/mol; and
wherein the anisotropic light absorbing particles comprise a dichroic dye.

**14.** The method according to claim 13, wherein the premixing includes adding anisotropic light absorbing particles of different colors to the liquid crystal respectively and mixing them together.

**15.** The method according to claim 14, wherein the dichroic dye comprises red dichroic dye, yellow dichroic dye and blue dichroic dye, and the red dichroic dye, yellow dichroic dye and blue dichroic dye are selected from anthraquinone-type dichroic dye; the ratio of the red dichroic dye, yellow dichroic dye and blue dichroic dye is regulated according to the target color, and the content of the dichroic dye based on the weight of the liquid crystal polymer composition is less than 10%.

**16.** A liquid crystal article comprising: a first substrate, a second substrate, and a layer of the liquid crystal polymer composition according to any one of claims 1-12 between the first substrate and the second substrate, wherein when no voltage is applied to the liquid crystal article, the liquid crystal article is opaque; while when voltage is applied to the liquid crystal article, the liquid crystal article is becoming clear, and the extent of transparency varies according to the applied voltage.

## Patentansprüche

**1.** Flüssigkristalline Polymerzusammensetzung, umfassend ein Flüssigkristall und anisotrope lichtabsorbierende Partikel, die in dem Polymer dispergiert sind, wobei der Flüssigkristall eine Mischung aus 35 bis 80 Gewichtsanteilen

Biphenylnitril-Flüssigkristall, 5 bis 30 Gewichtsanteilen Phenylbenzoat-Flüssigkristall, 5 bis 30 Gewichtsanteilen Fluorbiphenyl-Flüssigkristall und 1 bis 20 Gewichtsanteilen Benzolnitril-Flüssigkristall umfasst.

2. Zusammensetzung nach Anspruch 1, wobei die anisotropen lichtabsorbierenden Partikel einen dichroitischen Farbstoff umfassen.

3. Zusammensetzung nach einem der Ansprüche 1 bis 2, wobei der Biphenylnitril-Flüssigkristall ausgewählt ist aus einem Flüssigkristall mit der folgenden Struktur: 4-Ethyl-4'-cyanobiphenyl, 4-Butyl-4'-cyanobiphenyl, 4-Pentyl-4'-cyanobiphenyl, 4-Pentyloxy-4'-cyanobiphenyl, 4-(4-Hexyloxyphenyl)benzonitril, 3-Fluor-4-cyano-4"-propyl-1,1',4',1"-terphenyl, 4-Cyano-4'-trans-pentylcyclohexanebiphenyl, 4-Cyano-4'-pentylterphenyl, 4-Heptanoylbiphenyl oder 4-n-Octanoylbiphenyl.

4. Zusammensetzung nach einem der Ansprüche 1 bis 3, wobei der Phenylbenzoat-Flüssigkristall ausgewählt ist aus einem Flüssigkristall mit der folgenden Struktur: 4-Cyanophenyl-4-ethylbenzoat, 3-Fluor-4-cyanophenyl-4-n-propylbenzoat oder 4-Butyl-benzoesäure-4-cyanophenylester.

5. Zusammensetzung nach einem der Ansprüche 1 bis 4, wobei der Fluorbiphenyl-Flüssigkristall ausgewählt ist aus einem Flüssigkristall mit der folgenden Struktur: 4,4'-Bis(trans-4-propylcyclohexyl)-2-fluorbiphenyl.

6. Zusammensetzung nach einem der Ansprüche 1 bis 5, wobei der Benzolnitril-Flüssigkristall ausgewählt ist aus einem Flüssigkristall mit der folgenden Struktur: 1-Cyano-4-(4-propylcyclohexyl)benzol.

7. Zusammensetzung nach Anspruch 2, wobei der dichroitische Farbstoff einen roten dichroitischen Farbstoff, einen gelben dichroitischen Farbstoff und einen blauen dichroitischen Farbstoff umfasst und der rote dichroitische Farbstoff, der gelbe dichroitische Farbstoff und der blaue dichroitische Farbstoff aus einem dichroitischen Farbstoff vom Anthrachinon-Typ ausgewählt sind.

8. Zusammensetzung nach Anspruch 7, wobei der rote dichroitische Farbstoff aus einem Farbstoff mit der folgenden Struktur ausgewählt ist:

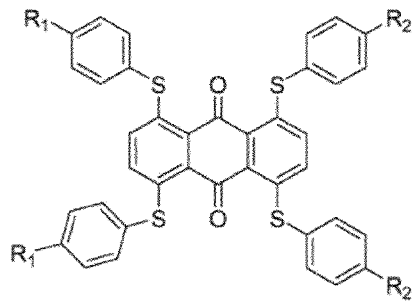

wobei $R_1$ und $R_2$ für H, Methyl, Ethyl oder tert-Butyl stehen.

9. Zusammensetzung nach Anspruch 7, wobei der gelbe dichroitische Farbstoff aus einem Farbstoff mit der folgenden Struktur ausgewählt ist:

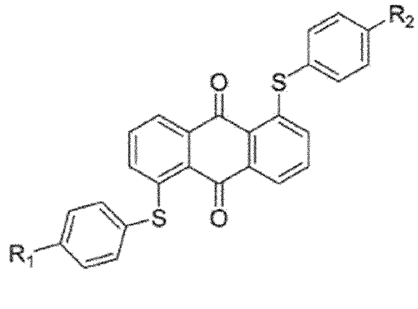

wobei $R_1$ und $R_2$ für H, tert-Butyl, F oder $CF_3$ stehen.

**10.** Zusammensetzung nach Anspruch 7, wobei der blaue dichroitische Farbstoff aus einem Farbstoff mit der folgenden Struktur ausgewählt ist:

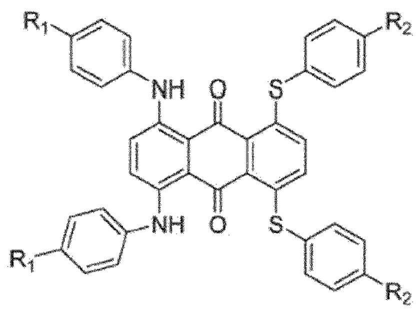

wobei $R_1$ und $R_2$ für H, Methyl, Ethyl oder tert-Butyl stehen.

**11.** Zusammensetzung nach einem der Ansprüche 1 bis 10, ferner umfassend einen Viskositätskonditionierer und/oder einen Stabilisator, der/die zu dem Flüssigkristall zugegeben wird/werden, wobei der Viskositätskonditionierer aus der Gruppe bestehend aus Isocyanat-Viskositätskonditionierern und Acrylat-Viskositätskonditionierern ausgewählt ist und der Stabilisator aus Benzotriazol-UV-Lichtabsorptionsstabilisatoren ausgewählt ist.

**12.** Zusammensetzung nach Anspruch 11, wobei der Viskositätskonditionierer aus der Gruppe bestehend aus Isophorondiisocyanat, Glycidacrylat, Toluoldiisocyanat und Diphenylmethandiisocyanat ausgewählt ist; und der Stabilisator aus Benzotriazolylmethylphenol ausgewählt ist.

**13.** Verfahren zur Herstellung einer flüssigkristallinen Polymerzusammensetzung, umfassend die folgenden Schritte:

Vormischen eines Flüssigkristalls mit anisotropen lichtabsorbierenden Partikeln, um eine Vormischung zu erhalten; und
Mischen der erhaltenen Vormischung mit einem Präpolymer, um eine Zusammensetzung zu erhalten,
Schichten und UV-Härten der resultierenden Zusammensetzung,
wobei die Intensität für das UV-Härten 10 bis 500 $mW/cm^2$ beträgt, und
wobei der Flüssigkristall eine Mischung aus 35 bis 80 Gewichtsanteilen Biphenylnitril-Flüssigkristall, 5 bis 30 Gewichtsanteilen Phenylbenzoat-Flüssigkristall, 5 bis 30 Gewichtsanteilen Fluorbiphenyl-Flüssigkristall und 1 bis 20 Gewichtsanteilen Benzolnitril-Flüssigkristall umfasst,
wobei das Präpolymer einen Photoinitiator, ein Monomer, einen Vernetzer und ein Oligomer mit einem Molekulargewicht von 1.000 bis 5.000 g/mol umfasst, wobei das Monomer aus der Gruppe bestehend aus Acrylatmonomeren und Isocyanatmonomeren ausgewählt ist, wobei der Vernetzer aus der Gruppe bestehend aus Acrylatvernetzern und Isocyanatvernetzern ausgewählt ist und das Oligomer aus Acrylatoligomeren mit einem Molekulargewicht von 1.000 bis 5.000 g/mol ausgewählt ist, und
wobei die anisotropen lichtabsorbierenden Partikel einen dichroitischen Farbstoff umfassen.

**14.** Verfahren nach Anspruch 13, wobei das Vormischen die Zugabe von anisotropen lichtabsorbierenden Partikeln jeweils unterschiedlicher Farbe zu dem Flüssigkristall und deren Zusammenmischen umfasst.

**15.** Verfahren nach Anspruch 14, wobei der dichroitische Farbstoff einen roten dichroitischen Farbstoff, einen gelben dichroitischen Farbstoff und einen blauen dichroitischen Farbstoff umfasst und der rote dichroitische Farbstoff, der gelbe dichroitische Farbstoff und der blaue dichroitische Farbstoff aus einem dichroitischen Farbstoff vom Anthrachinon-Typ ausgewählt sind; das Verhältnis des roten dichroitischen Farbstoffs, des gelben dichroitischen Farbstoffs und des blauen dichroitischen Farbstoffs der Zielfarbe entsprechend reguliert ist und der Gehalt des dichroitischen Farbstoffes weniger als 10 % des Gewichts der flüssigkristallinen Polymerzusammensetzung beträgt.

**16.** Flüssigkristalliner Gegenstand, umfassend: ein erstes Substrat, ein zweites Substrat und eine Schicht der flüssigkristallinen Polymerzusammensetzung nach einem der Ansprüche 1 bis 12 zwischen dem ersten Substrat und dem zweiten Substrat, wobei, wenn keine Spannung an den flüssigkristallinen Gegenstand angelegt wird, der flüssigkristalline Gegenstand opak ist; wohingegen, wenn eine Spannung an den flüssigkristallinen Gegenstand angelegt wird, der flüssigkristalline Gegenstand klar wird und das Ausmaß der Transparenz sich entsprechend der angelegten Spannung verändert.

**Revendications**

1. Composition de polymer/cristaux liquides comprenant, dispersés dans le polymer, des crystaux liquides et des particules anisotropes absorbant la lumière, dans laquelle les cristaux liquides comprennent un mélange de 35 - 80 parts en poids de biphényl-nitriles, 5 - 30 parts en poids de benzoate de phényle, 5 - 30 parts en poids de fluoro-biphényles et 1 - 20 parts en poids de benzène-nitriles.

2. Composition selon la revendication 1, dans laquelle les particules anisotropes absorbant la lumière comprennent un colorant dichroïque.

3. Composition selon l'une quelconque des revendications 1 - 2, dans laquelle les biphényl-nitriles sont choisis parmi les cristaux liquides ayant la structure suivante : 4-éthyl-4'-cyanobiphényle, 4-butyl-4'-cyanobiphényle, 4-pentyl-4'-cyanobiphényle, 4-pentyloxy-4'-cyanobiphényle, 4-(4-hexyloxyphényl)-benzonitrile, 3-fluoro-4-cyano-4"-propyl-1,1',4',1"-terphényle, 4-cyano-4'-trans-pentylcyclohexanebiphényle, 4-cyano-4'-pentylterphényle, 4-heptanoylbiphényle ou 4-n-octanoylbiphényle.

4. Composition selon l'une quelconque des revendications 1 - 3, dans laquelle les benzoates de phényle sont choisis parmi les cristaux liquides ayant la structure suivante : 4-ethylbenzoate de 4-cyanophényle, 4-n-propylbenzoate de 3-fluoro-4-cyanophényle ou le 4-butyl-benzoate de 4-cyanophenyle.

5. Composition selon l'une quelconque des revendications 1 - 4, dans lequel les fluoro-biphényles sont choisis parmi les cristaux liquides ayant la structure suivante : 4,4'-bis(trans-4-propylcyclohexyl)-2-fluorobiphényle.

6. Composition selon l'une quelconque des revendications 1 - 5, dans lequel les benzène-nitriles ont la structure suivante : 1-cyano-4-(4-propylcyclohexyl)benzène.

7. Composition selon la revendication 2, dans laquelle le colorant dichroïque comprend un colorant dichroïque rouge, un colorant dichroïque jaune et un colorant dichroïque bleu, le colorant dichroïque rouge, le colorant dichroïque jaune et le colorant dichroïque bleu étant choisis parmi les colorants dichroïques de type anthraquinone.

8. Composition selon la revendication 7, dans laquelle le colorant dichroïque rouge est choisi parmi les colorants ayant la structure suivante :

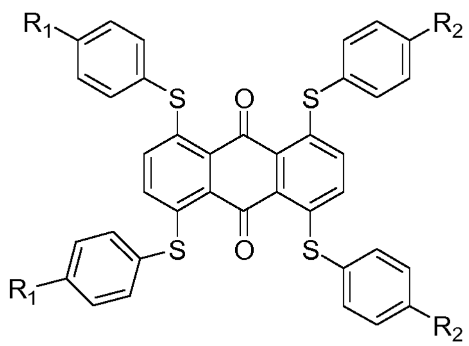

où $R_1$ et $R_2$ sont H, méthyle, éthyle or tert-butyle.

9. Composition selon la revendication 7, dans laquelle le colorant dichroïque jaune est choisi parmi les colorants ayant la structure suivante :

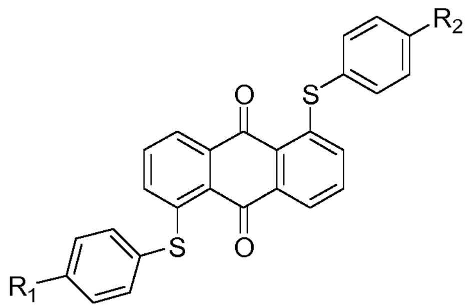

où $R_1$ et $R_2$ sont H, tert-butyle, F ou $CF_3$.

**10.** Composition selon la revendication 7, dans laquelle le colorant dichroïque bleu est choisi parmi les colorants ayant la structure suivante:

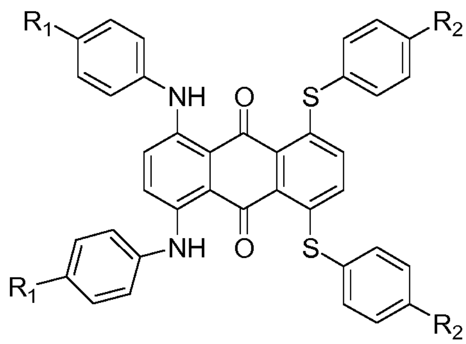

où $R_1$ et $R_2$ sont H, méthyle, éthyle or tert-butyle.

**11.** Composition selon l'une quelconque des revendications 1 - 10, comprenant en outre un agent d'ajustement de la viscosité et/ou un agent stabilisant ajouté aux cristaux liquides, dans laquelle l'agent d'ajustement de la viscosité est choisi dans le groupe constitué des isocyanates et acrylates, et l'agent stabilisant est choisi parmi les benzotriazole absorbant la lumière UV.

**12.** Composition selon la revendication 11, dans lequel l'agent d'ajustement de la viscosité est choisi dans le groupe constitué de isophorone-diisocyanate, acrylate de glycidyle, toluène-diisocyanate et diphénylemétháne-diisocyanate, et l'agent stabilisant est le benzotriazolylméthylphénol.

**13.** Procédé de préparation d'une composition polymère/cristaux liquides, comprenant les étapes suivantes :

mélanger au préalable des cristaux liquides avec des particules anisotropes absorbant la lumière, de manière à obtenir un prémélange, et
mélanger le prémélange obtenu avec un prépolymère de manière à obtenir une composition,
stratifier et réticuler par rayonnement UV la composition obtenue,
l'intensité pour la réticulation par rayonnement UV étant de 10 - 500 $mW/cm^2$, et
les cristaux liquides comprenant un mélange de 35 - 80 parts en poids de biphényl-nitriles, 5 - 30 parts en poids de benzoate de phényle, 5 - 30 parts en poids de fluoro-biphényles et 1 - 20 parts en poids de benzène-nitriles, et le prépolymère comprenant un photoamorceur, un monomère, un agent de réticulation et un oligomère ayant un poids moléculaire de 1000 - 5000 g/mole, le monomère étant choisi dans le groupe constitué des acrylates et isocyanates, l'agent de réticulation étant choisi dans le groupe constitué des monomères de type acrylates et isocyanates, et l'oligomère étant choisi parmi les acrylates oligomères ayant une masse moléculaire de 1000 - 5000 g/mole, et
les particules anisotropes absorbant la lumière comprenant un colorant dichroïque.

**14.** Procédé selon la revendication 13, dans lequel l'étape de mélanger au préalable comprend l'ajout de particules anisotropes absorbant la lumière de différentes couleurs aux cristaux liquides et le mélange de l'ensemble.

**15.** Procédé selon la revendication 14, dans lequel le colorant dichroïque comprend un colorant dichroïque rouge, un colorant dichroïque jaune et un colorant dichroïque bleu, le colorant dichroïque rouge, le colorant dichroïque jaune et le colorant dichroïque bleu étant choisis parmi les colorants dichroïques de type anthraquinone, la proportion du colorant dichroïque rouge, du colorant dichroïque jaune et du colorant dichroïque bleu étant ajustée en fonction de la couleur souhaitée, et la teneur en colorant dichroïque rapporté au poids de la composition polymère/cristaux liquides est inférieure à 10 %.

**16.** Article à cristaux liquides comprenant un premier substrat, un second substrat, et une couche d'une composition polymère/cristaux liquides selon l'une quelconque des revendications 1 - 12 entre le premier substrat et le second substrat, dans lequel, lorsqu'aucune tension n'est appliquée à l'article à cristaux liquides, l'article à cristaux liquides est opaque, tandisque lorsqu'une tension est appliquée à l'article à cristaux liquides, l'article à cristaux liquides devient transparent et le degré de transparence varie en fonction de la tension appliquée.

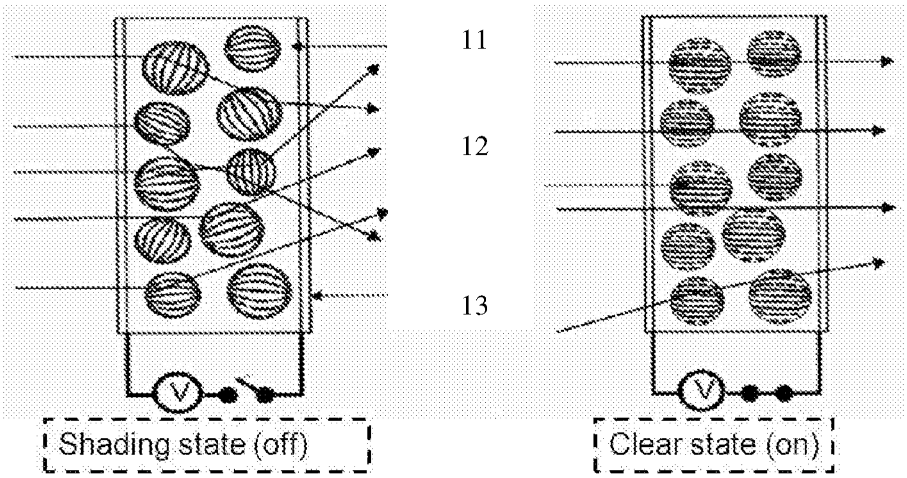


Fig. 1

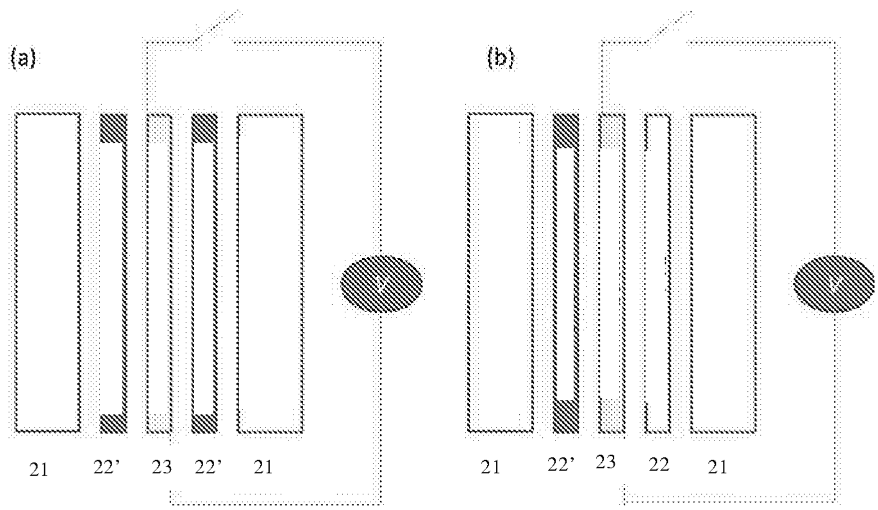


Fig. 2

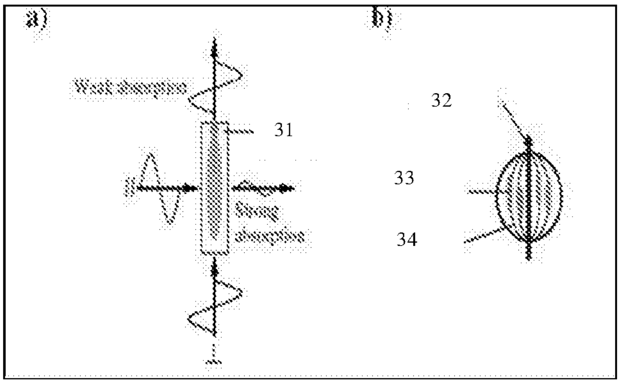


Fig. 3

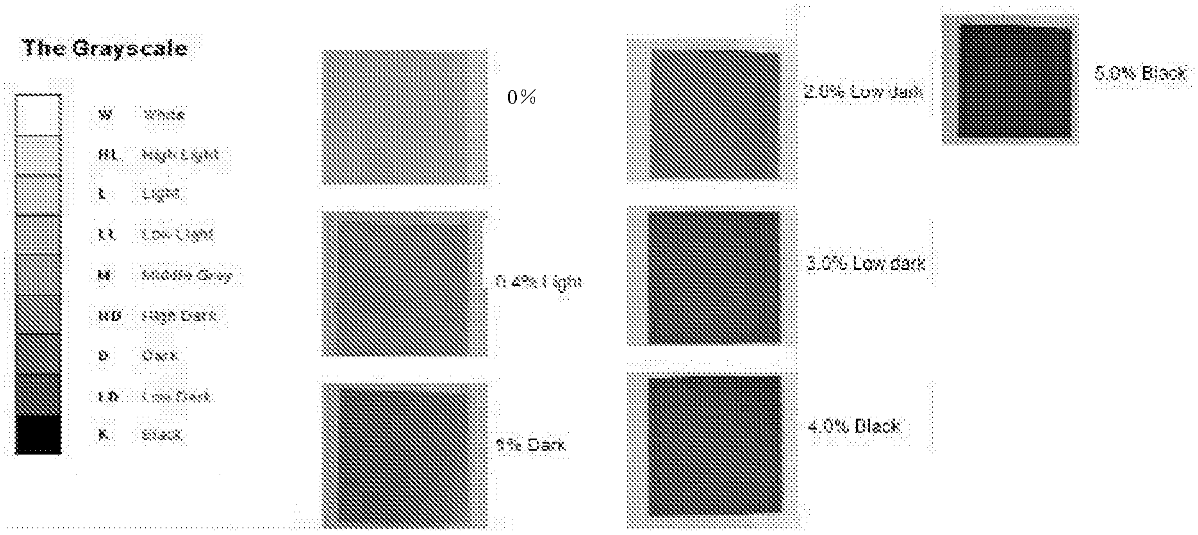
The Grayscale
W White
HL High Light
L Light
LL Low Light
M Middle Grey
HD High Dark
D Dark
LD Low Dark
K Black
0%
0.4% Light
1% Dark
2.0% Low dark
3.0% Low dark
4.0% Black
5.0% Black

Fig. 4

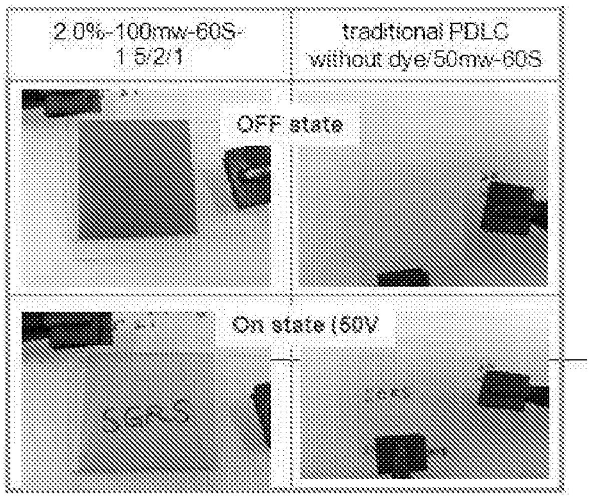
2.0%-100mw-60S-
1.5/2/1
traditional PDLC
without dye/50mw-60S
OFF state
On state (60V

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011068365 A2
- US 20100227084 A1